# EUROPEAN PATENT SPECIFICATION

(11) **EP 2 288 864 B1**
(45) Date of publication and mention of the grant of the patent: **29.07.2015**
(21) Application number: 09793900.3
(22) Date of filing: 16.06.2009
(51) Int. Cl.: F41H 5/04

(54) **BALLISTIC RESISTANT ARTICLE COMPRISING A PLURALITY OF MULTILAYERED MATERIAL SHEETS**
BESCHUSSSICHERER ARTIKEL MIT MEHREREN MEHRSCHICHTIGEN MATERIALSCHICHTEN
ARTICLE PARE-BALLES COMPORTANT PLUSIEURS FEUILLES DE MATÉRIAU MULTICOUCHES

(30) Priority: 16.06.2008 EP 08158299
(43) Date of publication of application: 02.03.2011
(73) Proprietor: DSM IP Assets B.V., 6411 TE Heerlen (NL)
(72) Inventor: VAN ELBURG, Johann, NL-6374 KC Landgraaf (NL)
(74) Representative: Steffanie, Leonardus Gerardus
(86) International application number: PCT/EP2009/057410
(87) International publication number: WO 2010/003769

(56) References cited:
- WO-A-2004/039565
- WO-A-2007/005043
- WO-A-2007/067405
- WO-A-2007/122009
- WO-A-2007/122010
- WO-A-2008/077605
- WO-A2-2006/124825
- US-A1- 2006 210 749
- US-A1- 2007 117 483

## Description

The invention relates to a ballistic resistant article, and in particular to a ballistic resistant article offering protection against high speed projectiles and very high speed projectiles, typically impacting with a speed of at least 1000 m/s, or even a speed of at least 1500 m/s.

In today's warfare threats are changing constantly. Such threats which may come from many sources, are increasingly unconventional in nature and are often aimed at military ground vehicles in conflict areas. Unconventional threats include so-called IED (Improvised Explosive Devices) and Explosively Formed Projectiles (EFP). These threats are particularly popular because of their ease of manufacture. IED for instance are a simple assembly of a grenade and a detonator in the form of two metal plates that make contact when driven over by a vehicle. EFP comprise a cylindrical steel or plastic casing filled with explosives wherein one end of the casing is provided with a cover in the form of a curved metal disc with inwardly pointing curvature. When the EFP is detonated, the explosion propels the metal disc and reshapes it into e.g. a slug that can easily penetrate steel armor. The reshaped disc can easily reach velocities of 2000 m/sec and more as recently reported by Newsweek (August 20-27, 2007) and Kijk.nl in November 2007.

A ballistic article and a process for its manufacture is known from WO2004/039565 A1. In this publication a stack of monolayers is formed, each monolayer containing unidirectionally oriented highly-drawn polyethylene fibers and at most 30 mass% of a plastic matrix material having a 100% modulus of at least 3 MPa, and with the fiber direction in each monolayer being rotated with respect to the fiber direction in an adjacent monolayer and subsequently the stack of monolayers is compressed at a pressure of more than 25 MPa and a temperature between 125 and 150°C. The article has a good ballistic protection at 80 °C.

In spite of numerous attempts made in the art to design armours suitable to stop unconventional threats, no effective ballistic armour was yet developed that is able to withstand at an acceptable weight these threats.

State of the art ballistic resistant articles, e.g. armors, consisting of plates of metal in e.g. vehicles, no longer provide adequate protection against major threats such as the IED and EFP. A reason thereof is that the impact energies involved are too large and can easily be of the order of 4 MJ and more. Even if a ballistic armor plate of metal could be designed to stop such unconventional threats, the armor plate would be too heavy to use and/or take too much volume to be practically feasible.

A further difficulty encountered in designing ballistic resistant articles effective against e.g. EFR is the tremendous heat generated when an EFP impacts the article, such heat reaching easily more than 1500 °C. The generated heat often results in a fire that weakens the ballistic resistant article and may reduce its stopping capabilities especially in multihit situations, i.e. situations where said article is impacted by EFP a plurality of times. Such multihit situations may also endanger the crew of an armoured vehicle.

It is therefore an object of the present invention to provide a ballistic resistant article having improved antiballistic properties when compared to the known ballistic armor plates. It is also an object of the present invention to provide a vehicle, e.g. a plane or a vessel, armoured with said ballistic resistant article.

In particular it is an object of the present invention to offer a ballistic resistant article that provides an effective protection against high velocity threats such as IED and EFP, i.e. threats travelling with a speed of at least 1000 m/s, said article preferably being able to withstand multiple, i.e. at least 2, impacts from said threats.

It is also an aim of the present invention to offer a ballistic resistant article that provides an effective protection against threats travelling with a speed of at least 1500 m/s.

It is also an aim of the present invention to offer a ballistic resistant article that provides an effective protection against threats travelling with a speed of at least 1500 m/s, said threats having a mass of at least 200 grams.

It is also an aim of the present invention to offer a ballistic resistant article that provides an effective protection against threats travelling with a speed of at least 1500 m/s, said threats having a mass of at least 500 grams.

Therefore, the present invention offers a ballistic resistant article as specified in claim 1.

In particular the invention offers a ballistic resistant article that comprises a plurality of superimposed or stacked multilayered material sheets, the sheets comprising a consolidated stack of unidirectional monolayers of drawn high molecular weight polyethylene, preferably ultra high molecular weight polyethylene, whereby the draw direction of two subsequent monolayers in the stack differs, with the proviso that the total thickness of the article is at least 100 mm.

It was highly unexpected and surprising and never considered in the art of ballistic resistant materials that an article based on fibrous monolayers and in particular on drawn high and ultra high molecular weight polyethylene would be able to protect against threats such as IED or EFP known to defy state of the art armours based on metal plates.

It is known that for example monolayers of drawn (ultra) high molecular weight polyolefin are not an intrinsically flame resistant material. It was therefore surprisingly observed that a ballistic resistance article of the invention performs better than any of the known armours based on metal plates. More surprisingly it was observed that an article according to the invention and based on said polyethylene performs better than e.g. a ballistic resistant article based on drawn poly(p-phenylene teraphthalamide) which is an intrinsically flame resistant material and known to have a flame resistance higher than that of said polyolefin.

It was also observed that by increasing the thickness of said article, e.g. above 200 mm, said article effectively reduces or catches spall. Catching the spall means prevent fragments from the IED or EFP to leave the ballistic resistant article at the back side, opposite the side facing the ballistic impact.

By monolayer is herein understood a planar layer comprising fibers. Preferably, said monolayer comprises a network of fibers. Said network is preferably a woven network of fibers, more preferably a non-woven network of fibers. Said woven network may be of any construction known in the art, e.g. a plane woven network or a basket weave network. Said non-woven network is preferably a felt, more preferably said non-woven network is a unidirectional network, i.e. a network consisting of a plurality of fibres unidirectionally aligned in parallel to one another along a common fiber direction.

The article of the invention comprise a plurality of multilayered sheets said sheets comprising a consolidated stack of monolayers. Preferably, said monolayer contain a unidirectional network of fibers, such monolayers being referred to herein for simplicity as unidirectional monolayers, and wherein the common fiber direction in a monolayer is oriented at an angle with respect to the common fiber direction in an adjacent monolayer.

The inventive article comprises a plurality of superimposed or stacked multilayered sheets. By superimposed or stacked sheets is herein understood sheets that are placed in front of one another such that their surfaces are at least partially overlapping. Preferably, said sheets are overlapping over substantially their whole surface area. Preferably the sheets are placed in close proximity to one another, i.e. at a distance of less than 2% of the thickness of the inventive article; more preferably, the sheets are placed in touching proximity. Preferably the thickness of a single sheet in said plurality of sheets is between 3 % and 20 % of the total thickness of said article, more preferably between 4 % and 15 %, most preferably between 5 % and 10 %. It was observed that inventive articles comprising a plurality of such sheets are increasingly effective in stopping threats such as IED or EFP.

In a preferred embodiment of the invention, the inventive article comprises a plurality of superimposed or stacked sheets wherein the total thickness of the plurality of sheets, i.e. the sum of the thicknesses of said sheets, is at least 100 mm, more preferably 200 mm, most preferably 300 mm. Preferably, the thickness of an individual sheet is between 3 % and 20 % of said total thickness of said plurality.

It was observed that for such embodiment wherein the thickness of the sheets which contribute to stopping the threat rather than the thickness of the entire article is within the above mentioned preferred ranges, a further improved ballistic resistance is obtained against IED and EFP.

Consolidation of monolayers is intended to mean that (at least part or percentage of) the monolayers are relatively firmly attached to one another to form one unit. In a preferred embodiment, the stack of monolayers is consolidated such that said monolayers are combined into a single unitary body and being prevented from shifting one in respect of another at least over part of their surface. A consolidated stack can be obtained by e.g. connecting the monolayers together by e.g. stiching or stapling or by compressing said stack under pressure at an elevated temperature. Preferably, the stack of monolayers is consolidated by compression at an elevated temperature, such a stack providing increased protection against high velocity threats and showing reduced delamination.

The number of monolayers in a consolidated stack thereof, may vary within a wide range and is preferably chosen to provide a desired areal density in the final product considering the desired performance, weight and cost.

The thickness of a monolayer in the inventive article may be varied within large ranges. Preferably the thickness of at least one monolayer is lower than 200 µm, more preferably lower than 150 µm, even more preferably lower than 100 µm, and most preferably lower than 50µm. The thickness of the monolayer can be measured according to any known technique in the art, e.g. with a micrometer or by embedding the monolayer in a resin and measuring its thickness with an optical or an electron microscope.

It is known how to manufacture fibers of a polymeric material e.g. by extrusion, compression moulding, blow moulding, spinning or any other technique known in the art. To manufacture fibers of a drawn polymeric material, said fiber is subjected to a drawing process in at least one direction. If the fiber is in a form of a tape or a film, the polymeric material is preferably drawn in a single direction, i.e. unidirectionally drawn; more preferably said material is drawn in two directions, i.e. bidirectionally drawn. It was observed that inventive articles comprising monolayers of fibers of a drawn polyethylene show improved resistance against EFP and IED. Preferably the draw ratio of said polymeric material and in particular of unidirectionally drawn polymeric material is at least 1, more preferably at least 1.5, more preferably at least 2, most preferably at least 3.

Preferably, the fibres have a volume fraction in the monolayers of preferably between 50% and 98%, more preferably between 70% and 95% and most preferably between 75% and 90%. It was observed that the strength of the monolayers depends on the volume fraction of the fibres within the monolayers.

By fiber is herein understood an elongated body, the length dimension of which is much greater than its thickness, the term fiber also including monofilament, multifilament, staple, tape, strip, ribbon and the like, having regular or irregular cross-sections. In a preferred embodiment, the fiber has a substantially round cross-section, e.g. oval, circular, C-type and the like. In a further preferred embodiment, the fiber is a tape.

The strength of the fibers depends by the material from which the fibers are made and on their (uniaxial) stretch ratio. The fibers manufactured from polyethylene have a strength of at least 0.9 GPa, more preferably at least 1.2 GPa, even more preferably at least 1.5 GPa, even more preferably at least 1.8 GPa, and even more preferably at least 2.1 GPa, and most preferably at least 3 GPa. The strength of said fibers may be determined according to any known method in the art, e.g. ASTM D2256 - 02(2008). Preferably said fibers of a polymeric material have a tensile modulus of at least 50 GPa and energies to break of at least 8 J/g as measured by said ASTM D2256.

If the fiber is a tape, the strength of the tape is at least 0.9 GPa, even more preferably at least 1.2 GPa, even more preferably at least 1.5 GPa, even more preferably at least 1.8 GPa, and even more preferably at least 2.1 GPa, and most preferably at least 3 GPa. The strength of a tape may be determined according to any known method in the art, e.g. by puling an e.g. 25 cm long tape clamped in barrel clamps at a rate of e.g. 25 cm/min on an Instron Tensile Tester in accordance with ASTM D2256 - 02(2008). Preferably, the tapes used to construct the monolayers have a width of at least 2 mm, more preferably at least 5 mm, even more preferably at least 30 mm. Said tapes preferably have an areal density of between 5 and 200 g/m² more preferably of between 10 and 120 g/m², even more preferably of between 15 and 80 g/m² and most preferably of between 20 and 60 g/m².

Preferably, the monolayers in the article of the invention comprise both fibers and a polymeric matrix composition, said composition including low modulus thermoplastic materials and/or high modulus thermosetting materials. Suitable thermoplastic matrix compositions preferably comprise elastomers having a tensile modulus of at most 3GPa, more preferably at most 1 GPa, morst preferably at most 500 MPa, examples thereof being given by e.g. WO 2007/115057 at pg. 14 and 15. Suitable thermosetting matrix compositions preferably comprise materials having a tensile modulus of at least 300 MPa, more preferably at least 1.5 GPa, most preferably at least 3 GPa, e.g. thermoset vinyl esters; combinations of at elast one of said thermoset vinyl esters with diallyl phthalate; and combinations of a vinyl ester polymer with one or more block coplymers of conjugated diens and vinyl aromatic monomers as described for example in "Kraton Thermoplastic Rubber" SC:68:82. The above referred tensile modulus can be measure according to ASTM D638 at 37°C. Preferably the matrix composition comprises a flame retardant as disclosed for example by WO 2007/067405.

In a further preferred embodiment of the invention, the fibers are manufactured from ultrahigh molecular weight polyethylene (UHMWPE), i.e. a polyethylene having an intrinsic viscosity (IV) of at least 4dl/g. Known UHMWPE fibers include those sold by DSM Dyneema under the name Dyneema®.

According to the invention high molecular weight polyethylene fibres are used . More preferably UHMWPE fibres are used, of which the filaments are prepared by a gel spinning process. A suitable gel spinning process is described in for example GB-A-2042414, GB-A-2051667, EP 0205960 A and WO 01/73173 A1, and in "Advanced Fiber Spinning Technology", Ed. T. Nakajima, Woodhead Publ. Ltd (1994), ISBN 185573 182 7. In short, the gel spinning process comprises preparing a solution of a polyolefin of high intrinsic viscosity, spinning the solution into filaments at a temperature above the dissolving temperature, cooling down the filaments below the gelling temperature, thereby at least partly gelling the filaments, and drawing the filaments before, during and/or after at least partial removal of the solvent.

The strength of the polyethylene fibres and in particular the strength of the UHMWPE fibers, is at least 0.9 GPa, more preferably at least 1.2 GPa, even more preferably at least 1.5 GPa, even more preferably at least 1.8 GPa, and even more preferably at least 2.1 GPa, and most preferably at least 3 GPa. Tensile strength (or tenacity) of the UHMWPE fibers may be determined according to ASTM D885M applied on multifilament yarns.

Hereinafter, more preferred embodiments of the inventive article are detailed.

In a preferred embodiment, the inventive article comprises a plurality of superimposed or stacked sheets having a thickness of at least 5 mm, more preferably at least 10 mm, more preferably at least 20 mm. Preferably, said thickness of the sheets is at most 50 mm, more preferably at most 30 mm. It was observed that such an article has improved ballistic properties. Preferably, the sheets in the inventive article have about the same thickness.

In a further preferred embodiment of the inventive article, unidirectional monolayers are produced by positioning a plurality of drawn (ultra) high molecular weight polyethylene fibres in parallel arrangement on a suitable surface and embedding the fibres in a suitable matrix material.

In a further preferred embodiment of the inventive article, the monolayers to be used in the ballistic article according to the invention are prepared by simultaneously pulling a plurality of fibres closely positioned in parallel arrangement through a suitable matrix material and to lay the fibres on a suitable surface. To promote wetting of the fibers, the matrix materials viscosity may be lowered by heating, or by adding solvents. In the latter case, evaporation of solvents leaves a monolayer, which can be used for further processing. Suitable matrix materials or binders bind or hold the polyethylene fibers together in the monolayers. The binder may enclose the fibers in their entirety or in part, such that the structure of the monolayers is retained during handling and manufacturing of the ballistic article. The binder may be applied in various forms or ways, for example as a film, that is melted to at least partially cover the polyolefine fibers, as a transverse bonding strip or as transverse fibers, or by impregnating and/or embedding the fibers with a polymer matrix in the form of a melt, a solution or a dispersion of a polymeric material in a liquid. In a preferred embodiment the binder is a polymeric matrix material, and may be a thermosetting material or a thermoplastic material, or a mixture of the two. The elongation at break of the matrix material is preferably greater than the elongation of the fibers. In case the matrix material is a thermosetting polymer, vinyl esters, unsaturated polyesters, epoxies or phenol resins are preferably selected. In case the matrix material is a thermoplastic polymer, polyurethanes, polyvinyls, polyacrylics, polyolefins or thermoplastic elastomeric block copolymers such as polyisoprene-polyethylene-butylene-polystyrene or polystyrene-polyisoprene-polystyrene block copolymers are preferably selected. Optionally the binder or matrix material may comprise flame retardant additives, flame retardant polymers and synergists. This further reduces the weakening of the ballistic armor article caused by fire upon impact of the high speed projectile. Preferably, the amount of binder in the monolayers is at most 30% by weight, more preferably at most 25%, at most 20% or even at most 15% by weight.

Unidirectional monolayers may also be obtained from oriented tapes or films. With unidirectional tapes and monolayers is meant in the context of this application tapes and monolayers which show a preferred orientation of the polymer chains in one direction, i.e. in the direction of drawing. Such tapes and monolayers may be produced by drawing, preferably by uniaxial drawing, and will exhibit anisotropic mechanical properties.

The oriented tapes or films comprise high molecular weight polyethylene, more preferably comprise UHMWPE. This polyethylene may be linear or branched, although preferably linear polyethylene is used. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains may suitably be measured by FTIR on a 2 mm thick compression moulded film, as mentioned in e.g. EP 0269151. The linear polyethylene may further contain up to 5 mol% of one or more other alkenes that are copolymerisable therewith, such as propene, butene, pentene, 4-methylpentene, octene. Preferably, the linear polyethylene is of high molar mass with an intrinsic viscosity (IV, as determined on solutions in decalin at 135°C) of at least 4 dl/g; more preferably of at least 8 dl/g, most preferably of at least 10 dl/g. Such polyethylene is also referred to as ultra high molecular weight polyethylene, UHMWPE. A polyethylene tape or film of this type yields particularly good antiballistic properties.

A preferred process for the formation of polyolefine based films or tapes comprises feeding a polyolefine powder between a combination of endless belts, compression-moulding the polyolefine powder at a temperature below the melting point thereof and rolling the resultant compression-moulded polyolefine followed by drawing. Such a process is for instance described in EP 0 733 460 A2. If desired, prior to feeding and compression-moulding the polyolefine powder, the polyolefine powder may be mixed with a suitable liquid organic compound having a boiling point higher than the melting point of said polyolefine.

Another preferred process for the formation of polyolefine based tapes or films comprises feeding a polyolefine to an extruder, extruding a tape or film at a temperature above the melting point thereof and drawing the extruded polyolefine tape or film. If desired, prior to feeding the polyolefine to the extruder, the polyolefine may be mixed with a suitable liquid organic compound, for instance to form a gel, such as is preferably the case when using ultra high molecular weight polyethylene. Preferably the polyethylene films are prepared by a gel process, as already described above.

Drawing, preferably uniaxial drawing, of films and in particular of the polyolefine based films, may be carried out by means known in the art. Such means comprise extrusion stretching and tensile stretching on suitable drawing units. To attain increased mechanical strength and stiffness, drawing may be carried out in multiple steps. In case of the preferred UHMWPE films, drawing is typically carried out uniaxially in a number of drawing steps. The first drawing step may for instance comprise drawing to a stretch factor of 3. Multiple drawing may typically result in a stretch factor of 9 for drawing temperatures up to 120°C, a stretch factor of 25 for drawing temperatures up to 140°C, and a stretch factor of 50 for drawing temperatures up to and above 150°C. By multiple drawing at increasing temperatures, stretch factors of about 50 and more may be reached. This results in high strength films, or if tapes are drawn, in high strength tapes, whereby for films or tapes of UHMWPE, strengths more than 2 GPa, or even more than 2.5 GPa may be obtained.

In a preferred embodiment, the resulting drawn tapes are used as such to produce a monolayer of unidirectionally aligned tapes. Furthermore, when films or tapes are used to construct monolayers, said films or tapes may be cut or split along the direction of drawing to achieve a desired width. The width of the thus produced unidirectional tapes is only limited by the width of the film from which they are produced. The width of the tapes preferably is more than 2 mm, more preferably more than 5 mm and most preferably more than 30, 50, 75 or 100 mm. The areal density of the tapes or monolayers can be varied over a large range, for instance between 3 and 200 g/m². Preferred areal density is lower than 150 g/m², more preferably lower than 100 g/m² and most preferably lower than 50 g/m².

In a preferred embodiment of the inventive article, polyethylene based monolayers are used wherein the thickness of at least one monolayer is lower than 200 µm, more preferably lower than 150 µm, even more preferably lower than 100 µm, and most preferably lower than 50µm. Although it is not necessary according to the invention that all monolayers have the ranges for thickness and strength in these preferred ranges, a ballistic resistant article wherein all monolayers have these ranges for thickness and strength is particularly preferred. Preferably said polyethylene is UHMWPE.

In some embodiments the polyethylene based monolayers in the ballistic article of the invention may include a binder which is locally applied to bond and stabilise the plurality of unidirectional tapes such that the structure of the monolayers is retained during handling and making of unidirectional sheets. Suitable binders are described in e.g. EP 0191306 B1, EP 1170925 A1, EP 0683374 B1 and EP 1144740 A1. Preferably said polyolefin is polyethylene, more preferably is UHMWPE.

In another preferred embodiment, the multilayer material sheet to be used in the ballistic article according to the invention comprises at least one layer, preferably all layers, built up of a plurality of drawn polyolefinic fibres and/or polyolefinic tapes, aligned such that they form a woven structure. Such layers may be manufactured by applying textile techniques, such as weaving, braiding, etc. of the fibres and/or tapes.

The multilayer material sheets comprise a consolidated stack of monolayers. The draw direction of two subsequent monolayers in the stack differs by an angle of α. The angle α is preferably between 45 and 135°, more preferably between 65 and 115° and most preferably between 80 and 100°. The multilayer material sheets to be used in the ballistic article according to the invention preferably comprise at least 2 unidirectional monolayers, more preferably at least 4 unidirectional monolayers, even more preferably at least 6 unidirectional monolayers. Increasing the number of unidirectional monolayers in the multilayer material sheet of the invention simplifies the manufacture of articles form these material sheets, for instance antiballistic plates.

The sheets of the ballistic resistant article according to the invention preferably comprises at least 10 unidirectional monolayers, more preferably at least 20 unidirectional monolayers, even more preferably at least 40 unidirectional monolayers, even more preferably at least 80 unidirectional monolayers and most preferably at least 160 unidirectional monolayers. In the event that the sheets of the ballistic resistant article according to the invention comprises woven layers of fibers or tapes, said sheets preferably comprises at least 10 layers, more preferably at least 20 layers, even more preferably at least 40 layers, even more preferably at least 80 layers and most preferably at least 160 layers.

The ballistic resistant article according to the invention may be used as such. In a preferred embodiment however, the ballistic resistant article according to the invention comprises at least one further sheet of inorganic material selected from the group consisting of ceramic, metal, glass(fiber) and graphite or carbon fiber, or combinations thereof. Particularly preferred is metal. In such case the metal in the metal sheet preferably has a melting point of at least 350 °C, more preferably at least 500 °C, most preferably at least 600 °C. Suitable metals include aluminum, magnesium, titanium, copper, nickel, chromium, beryllium, iron and copper including their alloys as e.g. steel and stainless steel and alloys of aluminum with magnesium (so-called aluminum 5000 series), and alloys of aluminum with zinc and magnesium or with zinc, magnesium and copper (so-called aluminum 7000 series). This results in the lightest antiballistic article with the highest durability. Durability in this application means the lifetime of an article under conditions of exposure to heat, moisture, light and UV radiation.

The ballistic resistant article according to the invention comprises a further unitary sheet of polyolefin. The further sheet of polyolefin may suitably be obtained through casting or extrusion techniques. The ballistic resistant article is characterized in that the further sheet is positioned at the outside of the stack of monolayers, at the strike face thereof. The amount of the further sheet of material is between 5 and 50wt% of the total weight of the ballistic resistant article, thus including the further sheet of material. The thickness of the further sheet of material is preferably between 0.5 and 20 mm. The further sheet may be used to further improve antiballistic performance, although this is not necessary. The further sheet may also be used to secure the ballistic resistant article onto a substrate, such as a military ground vehicle or armoured wheeled and tracked vehicle.

The article of the invention has a strike face and a back face, said strike face comprising a unitary sheet of polyolefin, more preferably of polyethylene, most preferably a unitary sheet of UHMWPE. By unitary sheet is herein understood a sheet obtained by extruding or compression molding a polymeric powder. Said article of this embodiment also comprises a back face, said back face comprising second sheets, said second sheets comprising a consolidated stack of second monolayers, said second monolayers comprising a network of polyethylene fibers, more preferably UHMWPE fibers. Most preferably, said second monolayers comprise unidirectionally aligned UHMWPE fibers. Preferably said fibers have a round cross-section. Preferably, the strike face has a thickness of at most 80% of the thickness of said article, more preferably at most 60%, most preferably at most 30%. It was observed that an article according to this embodiment, in addition to having increased ballistic resistance, can also be easily manufactures at reduced costs.

A process for the manufacture of a ballistic resistant article may be comprising the steps of:
(a) consolidating a stack of monolayers to form a multilayered sheet, said monolayers comprising fibers;
(b) using the sheet of step (a) to manufacture a ballistic resistant article having a total thickness of at least 100 mm, preferably at least 150 mm, more preferably at least 200 mm, even more preferably at least 250 mm, most preferably at least 300 mm.

Step (a) comprises stack stacking a plurality of multilayered sheets the sheets comprising a consolidated stack of monolayers of fibers, preferably unidirectional monolayers, more preferably unidirectional monolayers whereby the draw direction of two subsequent monolayers in the stack differs; and step (b) comprises consolidating the stacked sheets under elevated temperature and pressure such that a total thickness of the article of at least 100 mm is obtained.

Consolidation may suitably be done in a hydraulic press. The temperature during consolidating generally is controlled through the temperature of the press. A minimum temperature generally is chosen such that a reasonable speed of consolidation is obtained. In this respect 80 °C is a suitable lower temperature limit, preferably this lower limit is at least 100 °C, more preferably at least 120 °C, most preferably at least 140 °C. In case of (drawn) polymeric monolayers, i.e. monolayers comprising (drawn) polymeric fibers, a maximum temperature is chosen below the temperature at which the fibers loose their mechanical properties, e.g. for monolayers containing drawn polyolefine the temperature at which said monolayers lose their high mechanical properties due to e.g. melting of the polyolefine. Preferably the temperature is at least 10 °C, preferably at least 15 °C and even more at least 20 °C below the melting temperature of the (drawn) polymeric monolayer. In case of drawn polyolefin monolayers, preferably the temperature is at least 10 °C, preferably at least 15 °C and even more at least 20 °C below the melting temperature of said drawn polyolefin monolayer. In case the (drawn) polymeric monolayer and in particular the drawn polyolefine monolayer does not exhibit a clear melting temperature, the temperature at which said monolayer starts to lose its mechanical properties should be read instead of melting temperature. In the case of the preferred ultra high molecular weight polyethylene, a temperature below 149 °C, preferably below 145 °C generally will be chosen. Typical compression temperatures range from 90 to 145°C, preferably from 115 to 130°C. The pressure during consolidating preferably is at least 7 MPa, more preferably at least 15 MPa, even more preferably at least 20 MPa and most preferably at least 35 MPa. In this way a stiff antiballistic article is obtained. The optimum time for consolidation generally ranges from 5 to 180 minutes, preferably between 20 and 120 minutes, depending on conditions such as temperature, pressure and part thickness and can be verified through routine experimentation.

Preferably, in order to attain a high ballistic resistance, cooling after compression moulding at high temperature is carried out under pressure as well. Pressure is preferably maintained at least until the temperature is sufficiently low to prevent relaxation. This temperature can be established by one skilled in the art, and will generally be below 80 °C.

In a preferred embodiment of the ballistic resistant article according to the invention, the article comprises at least two consolidated stacks of a plurality of superimposed multilayered material sheets, the stacks being held together by securing means. Suitable securing means comprise for instance a ribbon of metal or polymer that is strapped around the stack of material sheets, or other standard fastening means. It may be desirable to include air gaps in such an embodiment between any two stacks.

The total thickness, or alternatively the weight, of the ballistic article required is obtained for example by stacking a sufficient amount of multilayer material sheets. Preferably the ballistic resistant article according to the invention has a total areal density ranging between 100 kg/m² and 400 kg/m², more preferably between 100 kg/m² and 300 kg/m², even more preferably between 100 kg/m² and 260 kg/m², and most preferably between 100 kg/m² and 220 kg/m². It has turned out that in this range of areal densities a particularly good antiballistic performance is obtained.

The ballistic article of the present invention is particularly advantageous over previously known ballistic articles as they provide an improved level of protection at a low weight, especially against high speed projectiles and very high speed projectiles. Particularly preferred is the use of the ballistic resistant article according to the invention to protect against high speed projectiles impacting with a speed of at least 1000 m/s, more preferably at least 1500 m/s, even more preferably at least 2000 m/s, and most preferably at least 3000 m/s.

Another particularly preferred use of the ballistic resistant article according to the invention provides protection against Explosively Formed Projectiles (EFP) and/or Improvised Explosive Devices (IED).

Due to the particular measures, as stipulated in claim 1, the ballistic resistant article according to the invention is particularly useful in catching high speed projectiles impacting with a speed of at least 1000 m/s, more preferably at least 1500 m/s, even more preferably at least 2000 m/s, and most preferably at least 3000 m/s, and/or Explosively Formed Projectiles. Catching should be understood to mean that any projectile that enters the ballistic article at a strike face thereof remains in the ballistic article, i.e. does not leave the ballistic article at a face opposite the strike face.

In a typical application, the ballistic article according to the invention is affixed at the outside of the wall of vehicle such as a tank or jeep, preferably enclosed by a metal plate, e.g. a steel plate. Affixing at the outside saves internal volume and therefor does not appreciably affect the freedom of movement of the tank or jeep users. Moreover this embodiment yields a better ballistic protection. Besides ballistic resistance, properties include for instance heat stability, shelf-life, deformation resistance, bonding capacity to other material sheets, formability, and so on.

The invention is now further explained by means of the following example and comparative experiments, without however being limited thereto.

### Example and comparative experiments

Trials were conducted to investigate the effectiveness of the ballistic article according to the invention against high velocity fragment threats. Tests were conducted using a High Velocity Gun which proved to be capable of simulating the effect of an EFP.

### Example 1.

Panels having an areal density of 25 kg/m² were pressed from Dyneema ® HB26, at a temperature of 125 °C and a pressure of 15 MPa during 90 minutes. The panels were cooled to 60 °C before release form the mould. In total 9 of such panels were assembled together though a strapping tape to form a ballistic resistant article having a thickness of 225 mm. Dyneema® HB26 consists of cross plied unidirectional sheets of polyethylene fibers having a strength of 3.5 GPa, and is commercially available from DSM Dyneema.

### Example 2.

16 sheets of 25 mm were assembled together as in Example 1 to form an article having an areal density of 314 kg/m² and a thickness of 400 mm. The sheets contained monolayers made of polypropylene P400 fibers, said sheets being sold by Milliken under the name Tegris®.

### Example 3.

6 sheets of 25 mm were assembled together as in Example 1 to form an article having an areal density of 305 kg/m² and a thickness of 150 mm. The sheets contained monolayers made of S2 glass fibers said sheets being sold by AGY.

### Example 4.

Sheets comprising woven poly(p-phenylene teraphthalamide) fibers and a phenolic resin were obtained by pressing at 160 °C and 7.5 MPa during 80 minutes with subsequent cooling under pressure to 65 °C. The sheets having an areal density of 25 kg/m₂ were assembled together in the same way as Example 1, to obtain a total areal density of 290 kg/m² and a thickness of 225 mm.

### Example 5.

Example 1 was repeated, the difference being that instead of Dyneema ® HB26 monolayers, monolayers comprising unidirectionally aligned tapes were used. The tapes were manufactured from UHMWPE (GUR X168 from Tycona) according to the method described in US 2006/0210749 (Examples 2-4). The obtained ballistic resistant article had an areal density of 216 kg/m².

### Comparative experiment A

Panels of rolled hardened steel were assembled together in the same way as Example 1, to obtain a total areal density of 525 kg/m2 and were tested using a High Velocity Gun.

### Comparative experiment B

Panels comprising woven poly(p-phenylene teraphthalamide) fibers and a phenolic resin were obtained by pressing at 160 °C and 7.5 MPa during 80 minutes with subsequent cooling under pressure to 65 °C. The panels having an areal density of 25 kg/m² were assembled together in the same way as Example 1, to obtain a total areal density of 275 kg/m² and a thickness of 215 mm.

### Anti-ballistic testing

Anti ballistic testing was done with a 50mm High Velocity Gun to fire a hemispherical nosed copper projectile of 500 gram at velocities of around 1750 m/s into the article as described above to measure its effectiveness of stopping projectiles. A performance marked "good" means that the article was able to stop the threat.

| Example/ Comparative experiment | Configuration | Areal density (kg/m2) | Performance |
|---|---|---|---|
| 1 | Dyneema® HB26 panels | 225 | good |
| 2 | Polypropylene fibers | 314 | good |
| 3 | Glass fibers | 305 | good |
| 4 | Aramid fibers | 302 | good |
| 5 | Polyethylene tapes | 216 | good |
| A | Armor steel panels | 525 | fail |
| B | Panels with aramid fiber | 275 | fail |

The impact of the projectile resulted in a fire causing weakening of the tested substrates.

The test results in the table above show that the article of Example 1 as well as those of the remaining examples stop the projectile, resulting in a 'good' under performance.

The armor steel configuration from comparative experiment A -at more than double weight than the article of Example 1, is penetrated by the projectile, consequently resulting in a 'fail'.

The aramid configurations from comparative experiment B at higher weight than the article of Example 1, are penetrated by the projectile, consequently resulting in a 'fail'. However, the article of Example 4 containing aramid fibers and having an areal density of 302 kg/m², successfully stopped the EFP threat at weight still lower than that of a conventional steel armor.

The above presented results demonstrate that a ballistic article of Dyneema® with a total thickness of at least 200 mm is able to offer protection against high speed projectiles at a lower weight than state of the art ballistic articles, including armor steel and article from aromatic polyamide.

The excellent ballistic performance of the articles of Dyneema®, an intrinsically not flame retardant material, is very much surprising compared to the - intrinsically flame retardant- aramid articles and the much heavier steel armours.

## Claims

1. Ballistic resistant article comprising a strike face and a back face, the strike face comprising a unitary sheet of polyolefin, the back face comprising a plurality of superimposed multilayered material sheets, the multilayered material sheets comprising a consolidated stack of unidirectional monolayers, said monolayers comprising drawn high molecular weight polyethylene fibers with a strength of at least 0.9 GPa, whereby the draw direction of two subsequent monolayers in the stack differs, with the proviso that the total thickness of the article is at least 100 mm.

2. Ballistic resistant article according to claim 1, whereby the unitary sheet is of polyethylene.

3. Ballistic resistant article according to claim 1 or 2, whereby the unitary sheet is of ultra high molecular weight polyethylene (UHMWPE).

4. Ballistic resistant article according to any of the preceding claims, wherein the strike face has a thickness of at most 80% of the thickness of said article.

5. Ballistic resistant article according to any of the preceding claims, wherein the strike face has a thickness of between 30% and 80% of the thickness of said article.

6. Ballistic resistant article according to any of the preceding claims, wherein said monolayers comprise UHMWPE fibers.

7. Ballistic resistant article according to any of the preceding claims, whereby the thickness of a single multilayered material sheet is between 3% and 20% of the total thickness of the article.

8. Ballistic resistant article according to claim 1 or 2 comprising a plurality of superimposed multilayered material sheets, the sheets comprising a consolidated stack of unidirectional monolayers of drawn high molecular weight polyolefin, whereby the draw direction of two subsequent monolayers in the stack differs.

9. Ballistic resistant article according to any one of the preceding claims, wherein the article comprises at least two stacks of a plurality of superimposed multilayered material sheets, the stacks being held together by securing means.

10. Ballistic resistant article according to any one of the preceding claims, having a total areal density ranging between 100 kg/m² and 400 kg/m².

11. Ballistic resistant article according to any one of the preceding claims, further comprising one or more sheets of material selected from the group consisting of ceramic, steel, aluminum, magnesium, titanium, nickel, chromium and iron or their alloys, glass and graphite, or combinations thereof.

12. Ballistic resistant article according to claim 11, wherein the sheet of material is positioned at the outside of the stack of monolayers at least at the strike face thereof.

13. Ballistic resistant article according to any one of the preceding claims, wherein at least one monolayer comprises a plurality of unidirectional tapes of drawn polyolefin, aligned in the same direction.

14. Ballistic resistant article according to any one of the preceding claims comprising at least one layer comprising a woven fabric of drawn polyolefin fibers and/or polyolefin tapes respectively.

15. The use of a ballistic resistant article according to any one of claims 1-14 to protect against Explosively Formed Projectiles and/or Improvised Explosive Devices.

## Patentansprüche

1. Ballistikschutzerzeugnis mit Aufschlag- und Rückseite, wobei die Aufschlagseite eine einheitliche Fläche aus Polyolefin und die Rückseite mehrere übereinander angeordnete mehrschichtige Materialflächen umfasst, wobei die mehrschichtigen Materialflächen einen konsolidierten Stapel unidirektionaler Monoschichten umfassen, wobei die Monoschichten verstreckte Fasern aus hochmolekularem Polyethylen mit einer Festigkeit von mindestens 0,9 GPa umfassen, bei dem zwei im Stapel aufeinanderfolgende Monoschichten sich in ihrer Ausrichtung unterscheiden, mit der Maßgabe, dass das Erzeugnis über eine Gesamtdicke von mindestens 100 mm verfügt.

2. Ballistikschutzerzeugnis nach Anspruch 1, bei dem die einheitliche Fläche aus Polyethylen besteht.

3. Ballistikschutzerzeugnis nach Anspruch 1 oder 2, bei dem die einheitliche Fläche aus ultrahochmolekularem Polyethylen (UHMWPE) besteht.

4. Ballistikschutzerzeugnis nach einem der vorhergehenden Ansprüche, bei dem die Aufschlagseite stärkemäßig höchstens 80% der Stärke des Erzeugnisses ausmacht.

5. Ballistikschutzerzeugnis nach einem der vorhergehenden Ansprüche, bei dem die Aufschlagseite stärkemäßig zwischen 30% und 80% der Stärke des Erzeugnisses ausmacht.

6. Ballistikschutzerzeugnis nach einem der vorhergehenden Ansprüche, bei dem die Monoschichten UHMWPE-Fasern umfassen.

7. Ballistikschutzerzeugnis nach einem der vorhergehenden Ansprüche, bei dem eine einzelne mehrschichtige Materialfläche stärkemäßig zwischen 3% und 20% der Gesamtstärke des Erzeugnisses ausmacht.

8. Ballistikschutzerzeugnis nach Anspruch 1 oder 2, umfassend mehrere übereinander angeordnete mehrschichtige Materialflächen, wobei die Flächen einen konsolidierten Stapel unidirektionaler Monoschichten aus verstrecktem hochmolekularem Polyolefin umfassen, bei dem zwei im Stapel aufeinanderfolgende Monoschichten sich in ihrer Ausrichtung unterscheiden.

9. Ballistikschutzerzeugnis nach einem der vorhergehenden Ansprüche, bei dem das Erzeugnis mindestens zwei Stapel mehrerer übereinander angeordneter mehrschichtiger Materialflächen umfasst, wobei die Stapel durch Befestigungsmittel zusammengehalten werden.

10. Ballistikschutzartikel nach einem der vorhergehenden Ansprüche mit einer Gesamtflächendichte zwischen 100 kg/m² und 400 kg/m².

11. Ballistikschutzerzeugnis nach einem der vorhergehenden Ansprüche, ferner umfassend mindestens eine Fläche aus Material aus der Gruppe bestehend aus Keramik, Stahl, Aluminium, Magnesium, Titan, Nickel, Chrom und Eisen oder deren Legierungen, Glas und Graphit oder Kombinationen davon.

12. Ballistikschutzerzeugnis nach Anspruch 11, bei dem die Materialfläche an der Außenseite des Stapels aus Monoschichten zumindest auf dessen Aufschlagseite angeordnet ist.

13. Ballistikschutzerzeugnis nach einem der vorhergehenden Ansprüche, bei dem mindestens eine Monoschicht mehrere unidirektionale Bändchen aus verstrecktem Polyolefin in gleicher Ausrichtung umfasst.

14. Ballistikschutzerzeugnis nach einem der vorhergehenden Ansprüche, umfassend mindestens eine Schicht mit einem Gewebe aus verstreckten Polyolefinfasern bzw. Polyolefinbändchen umfasst.

15. Verwendung eines Ballistikschutzerzeugnisses gemäß einem der Ansprüche 1-14 zum Schutz gegen explosiv gebildete Projektile und/oder unkonventionelle Sprengund Brandvorrichtungen ("Improved Explosive Devices").

## Revendications

1. Article pare-balles comprenant une face destinée à recevoir l'impact et une face postérieure, la face destinée à recevoir l'impact comprenant une feuille unitaire de polyoléfine, la face postérieure comprenant une pluralité de feuilles de matériau multicouches superposées, les feuilles de matériau multicouches comprenant une superposition consolidée de monocouches unidirectionnelles, lesdites monocouches comprenant des fibres de polyéthylène à haute masse moléculaire étiré ayant une solidité d'au moins 0,9 GPa, la direction d'étirage de deux monocouches consécutives dans la superposition étant différente, sous réserve que l'épaisseur totale de l'article soit d'au moins 100 mm.

2. Article pare-balles selon la revendication 1, dans lequel la feuille unitaire est en polyéthylène.

3. Article pare-balles selon la revendication 1 ou 2, dans lequel la feuille unitaire est en polyéthylène à ultra-haute masse moléculaire (UHMWPE).

4. Article pare-balles selon l'une quelconque des revendications précédentes, dans lequel la face destinée à recevoir l'impact a une épaisseur représentant au maximum 80 % de l'épaisseur dudit article.

5. Article pare-balles selon l'une quelconque des revendications précédentes, dans lequel la face destinée à recevoir l'impact a une épaisseur représentant de 30 % à 80 % de l'épaisseur dudit article.

6. Article pare-balles selon l'une quelconque des revendications précédentes, dans lequel lesdites monocouches comprennent des fibres d'UHMWPE.

7. Article pare-balles selon l'une quelconque des revendications précédentes, dans lequel l'épaisseur d'une seule feuille de matériau multicouches représente de 3 % à 20 % de l'épaisseur totale de l'article.

8. Article pare-balles selon la revendication 1 ou 2, comprenant une pluralité de feuilles de matériau multicouches superposées, les feuilles comprenant une superposition consolidée de monocouches unidirectionnelles de polyoléfine à haute masse moléculaire étirée, la direction d'étirage de deux monocouches consécutives dans la superposition étant différente.

9. Article pare-balles selon l'une quelconque des revendications précédentes, l'article comprenant au moins deux superpositions d'une pluralité de feuilles de matériau multicouches superposées, les superpositions étant maintenues ensemble par un moyen de fixation.

10. Article pare-balles selon l'une quelconque des revendications précédentes, ayant une densité surfacique totale de 100 kg/m² à 400 kg/m².

11. Article pare-balles selon l'une quelconque des revendications précédentes, comprenant en outre une ou plusieurs feuilles de matériau sélectionné dans le groupe constitué de la céramique, de l'acier, de l'aluminium, du magnésium, du titane, du nickel, du chrome et du fer ou de leurs alliages, du verre et du graphite, ou de combinaisons de ceux-ci.

12. Article pare-balles selon la revendication 11, dans lequel la feuille de matériau est positionnée à l'extérieur de la superposition de monocouches au moins sur la face destinée à recevoir l'impact dudit article.

13. Article pare-balles selon l'une quelconque des revendications précédentes, dans lequel au moins une monocouche comprend une pluralité de rubans unidirectionnels de polyoléfine étirée, alignés dans la même direction.

14. Article pare-balles selon l'une quelconque des revendications précédentes, comprenant au moins une couche comprenant un tissu tissé de fibres de polyoléfine étirée et/ou de rubans de polyoléfine, respectivement.

15. Utilisation d'un article pare-balles selon l'une quelconque des revendications 1 à 14 pour protéger contre des projectiles formés par explosion et/ou des engins explosifs improvisés.
